# EUROPEAN PATENT APPLICATION

(11) **EP 4 489 042 A1**
(43) Date of publication of application: **08.01.2025**
(21) Application number: 23763176.7
(22) Date of filing: 03.02.2023
(51) Int. Cl.: H01F 37/00, H01F 27/24, H01F 27/28

(54) **JOINING INDUCTOR AND CIRCUIT**

(30) Priority: 04.03.2022 JP 2022033796
(71) Applicant: OMRON Corporation, Kyoto 600-8530 (JP)
(72) Inventor: EBISUMOTO, Daigoro, Kyoto-shi, Kyoto 600-8530 (JP); ISHIBASHI, Hiroki, Kyoto-shi, Kyoto 600-8530 (JP); KAWAMOTO, Takayuki, Kyoto-shi, Kyoto 600-8530 (JP)
(74) Representative: HGF
(86) International application number: PCT/JP2023/003605
(87) International publication number: WO 2023/166914

(57) **Abstract**

A joining inductor includes a core, a first winding, and a second winding. The core includes a core body. The core body includes a first core window, a second core window, a first leg, a second leg, and a third leg. The first core window and the second core window are positioned at an interval in a first direction and each penetrate the core body in a second direction. The first leg is positioned between the first core window and the second core window. The second leg is positioned on one side of the first leg in the first direction. The third leg is positioned on another side of the first leg in the first direction. The first winding is wound around the first leg and includes winding ends positioned at the first core window. The second winding is wound around the first leg and includes winding ends positioned at the second core window. Each of the first leg, the second leg, and the third leg includes at least one gap in a third direction.

## Description

### TECHNICAL FIELD

The present disclosure relates to a joining inductor and a circuit comprising the joining inductor.

### BACKGROUND ART

Patent Document 1 discloses a reactor for a multiphase converter. The reactor comprises a core including a central leg and end legs located on both sides of the central leg.

### PRIOR ART DOCUMENT

### PATENT DOCUMENT

Patent Document 1: JP-A-2012-65453

### SUMMARY OF THE INVENTION

### PROBLEMS TO BE SOLVED BY THE INVENTION

In the reactor of Patent Document 1, since a converter coil is wound around the end leg of the core, it may be difficult to downsize in a winding thickness direction of the converter coil.

An object of the present disclosure is to provide a joining inductor that can downsize and a circuit including the joining inductor.

### SOLUTIONS TO THE PROBLEMS

A joining inductor according to an aspect of the present disclosure includes:
a core including a core body, the core body including a first core window, a second core window, a first leg, a second leg, and a third leg, the first core window and the second core window being positioned at an interval in a first direction and each penetrating the core body in a second direction intersecting the first direction, the first leg being positioned between the first core window and the second core window, the second leg being positioned on one side of the first leg in the first direction, the first core window being positioned between the first leg and the second leg, the third leg being positioned on another side of the first leg in the first direction, the second core window being positioned between the first leg and the third leg;
a first winding wound around the first leg and including winding ends positioned at the first core window; and
a second winding wound around the first leg and including winding ends positioned at the second core window, wherein
each of the first leg, the second leg, and the third leg includes at least one gap in a third direction intersecting the first direction and the second direction.

A circuit according to one aspect of the present disclosure includes the joining inductor according to the above aspect.

### EFFECTS OF THE INVENTION

According to the joining inductor of the above aspect, it is possible to realize a joining inductor that can downsize.

According to the circuit of the above aspect, it is possible to realize a circuit that can downsize by the joining inductor.

### BRIEF DESCRIPTION OF THE DRAWINGS

Fig. 1 is a configuration diagram illustrating a circuit including a joining inductor according to an embodiment of the present disclosure.
Fig. 2 is a perspective view of the joining inductor of Fig. 1.
Fig. 3 is a schematic front view of the joining inductor of Fig. 1
Fig. 4 is a schematic front view illustrating a first modification of the joining inductor of Fig. 1.
Fig. 5 is a schematic front view illustrating a second modification of the joining inductor of Fig. 1.
Fig. 6 is a schematic front view illustrating a third modification of the joining inductor of Fig. 1.
Fig. 7 is a graph showing a relationship between a coupling coefficient and a ratio of the gap of the second leg and the gap of the second leg to the gap of the first leg.
Fig. 8 is a configuration diagram illustrating a first modification of the circuit of Fig. 1.
Fig. 9 is a configuration diagram illustrating a second modification of the circuit of Fig. 1.

### DETAILED DESCRIPTION

Hereinafter, an example of the present disclosure will be described with reference to the accompanying drawings. The following description is merely exemplary in nature and is not intended to limit the present disclosure, its application, or its use. The accompanying drawings are schematic, and ratios of dimensions and the like do not necessarily match actual ones.

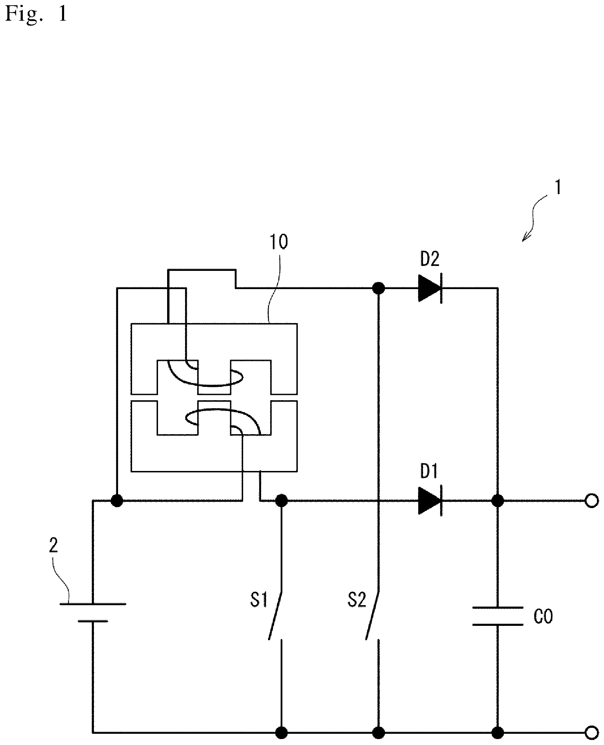

As illustrated in Fig. 1, a joining inductor 10 according to an embodiment of the present disclosure constitutes a part of a circuit 1. In the present embodiment, the circuit 1 is a non-isolated boost converter to which a DC power supply 2 is connected.

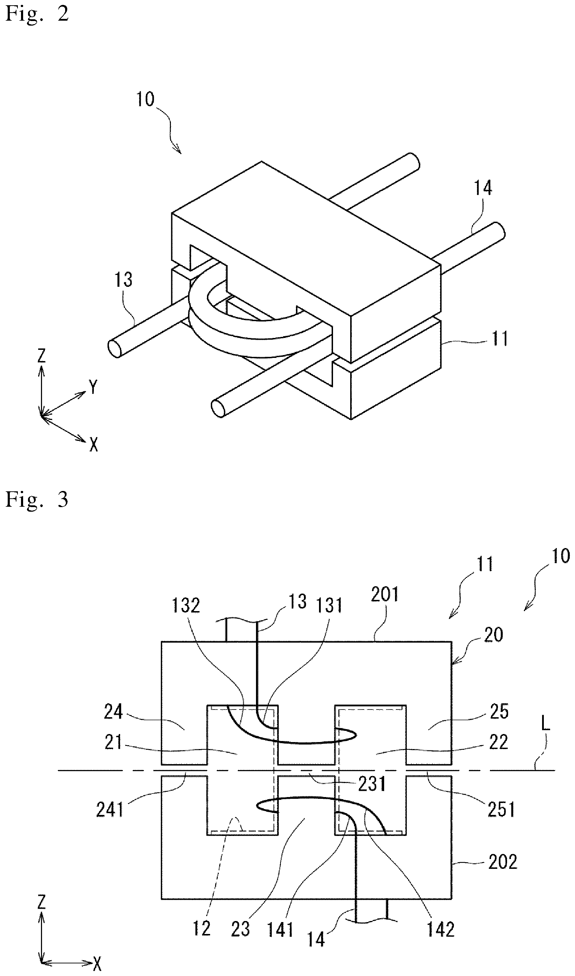

As illustrated in Figs. 2 and 3, the joining inductor 10 includes a core 11, a first winding 13, and a second winding 14. The core 11, the first winding 13, and the second winding 14 are insulated from each other. In the present embodiment, the joining inductor 10 includes a bobbin 12 (shown in Fig. 3) that covers a first leg 23 of the core 11 to be described later.

As illustrated in Fig. 3, the core 11 includes a core body 20. The core body 20 includes a first core window 21, a second core window 22, and three legs (hereinafter referred to as the first leg 23, the second leg 24, and the third leg 25).

The first core window 21 and the second core window 22 are spaced apart in a first direction (for example, in the X direction). Each of the first core window 21 and the second core window 22 penetrates the core body 20 in a second direction (for example, in the Y direction) intersecting the first direction X.

The first leg 23 is located between the first core window 21 and the second core window 22. The second leg 24 is located on one side of the first leg 23 in the first direction X, and the first core window 21 is located between the second leg 24 and the first leg 23. The third leg 25 is located on the other side of the first leg 23 in the first direction X, and the second core window 22 is located between the third leg 25 and the first leg 23. Each of the first leg 23, the second leg 24, and the third leg 25 extends along a third direction (for example, in the Z direction,) intersecting the first direction X and the second direction Y, and includes one gap 231, 241, or 251 in a middle thereof. In the present embodiment, the gaps 231, 241, and 251 of the respective legs are formed by gaps (In other words, gap spaces).

In the present embodiment, the core body 20 has a substantially rectangular parallelepiped shape as a whole, and includes two members 201 and 202. Each of the members 201 and 202 is made of ferrite, for example, and has a substantially E-shape when viewed along the second direction Y. The members 201 and 202 are located symmetrically with respect to an imaginary line L passing through the center of the core body 20 in the third direction Z with an interval therebetween in the third direction Z.

The first winding 13 is wound around the first leg 23 and includes winding ends 131, 132 positioned at the first core window 21. In other words, the first winding 13 is wound around the first leg 23 to start winding from the first core window 21 and finish winding at the first core window 21.

The second winding 14 is wound around the first leg 23 and includes winding ends 141, 142 positioned at the second core window 22. In other words, the second winding 14 is wound around the first leg 23 to start winding from the second core window 22 and finish winding at the second core window 22.

Each of the first winding 13 and the second winding 14 is wound around the first leg 23 by N.5 turns (N is a natural number) (in other words, wound around the first leg 23 by a fractional number of turns). In the present embodiment, each of the first winding 13 and the second winding 14 is wound around the first leg 23 by 1.5 turns.

The joining inductor 10 and the circuit 1 can exhibit the following effects.

The joining inductor 10 includes a core 11, a first winding 13, and a second winding 14. The core 11 includes a core body 20. The core body 20 includes a first core window 21, a second core window 22, a first leg 23, a second leg 24, and a third leg 25. The first core window 21 and the second core window 22 are positioned at an interval in the first direction X and penetrate the core body 20 in the second direction Y. The first leg 23 is positioned between the first core window 21 and the second core window 22. The second leg 24 is located on one side of the first leg 23 in the first direction X, and the first core window 21 is located between the second leg 24 and the first leg 23. The second leg 24 is located on the other side of the first leg 23 in the first direction X, and the second core window 22 is located between the second leg 24 and the first leg 23. The first winding 13 is wound around the first leg 23 and includes winding ends 131, 132 positioned at the first core window 21. The second winding 14 is wound around the first leg 23 and includes winding ends 141, 142 positioned at the second core window 22. Each of the first leg 23, the second leg 24, and the third leg 25 includes at least one gap 231, 241 or 251 in the third direction Z. With such a configuration, since the winding is not wound around the second leg 24 and the third leg 25 located outside the first leg 23 in the first direction X, the joining inductor 10 can downsize in the winding thickness direction (that is, the first direction X) of the first winding 13 and the second winding 14.

In general, in a case where the winding is wound around the second leg 24 and the third leg 25, a special bobbin that covers the second leg 24 and the third leg 25 is required, and the manufacturing cost increases. In the joining inductor 10, since the winding is wound only around the first leg 23, a special bobbin is not required, and an increase in manufacturing cost can be suppressed.

The circuit 1 can realize a circuit that can downsize by the joining inductor 10.

The joining inductor 10 and the circuit 1 may be configured as follows.

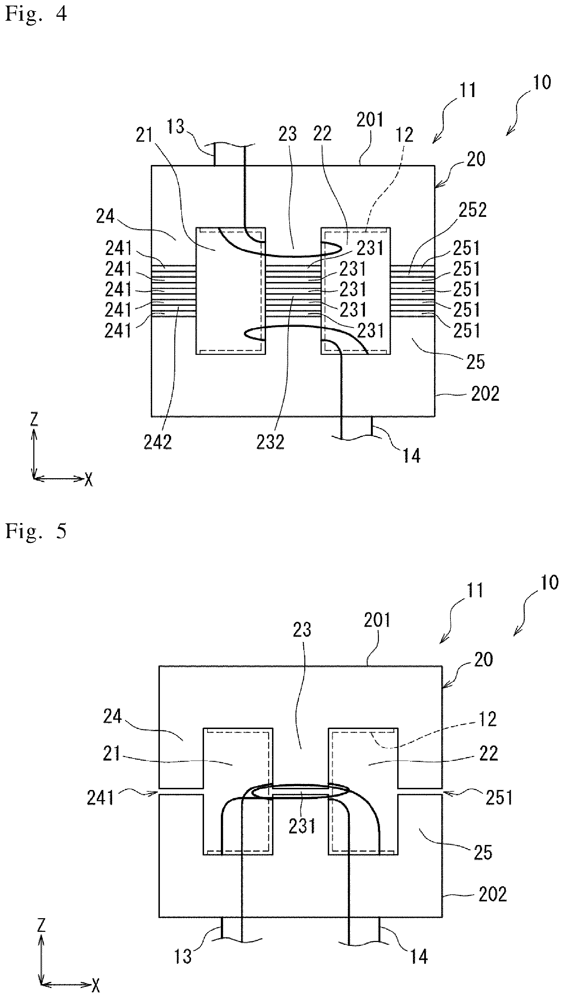

As illustrated in Fig. 4, each of the first leg 23, the second leg 24, and the third leg 25 may include a plurality of gaps 231, 241, and 251 in the third direction Z. With this configuration, the fringing effect between the two members 201 and 202 of the core body 20 can be inhibited. In the joining inductor 10 of Fig. 4, as an example, insulating sheets (in other words, spacer) and magnetic members 232, 242, and 252 are alternately arranged along the third direction Z, and the spacers constitute the gaps 231, 241, and 251 of the respective legs. The gaps 231, 241, and 251 of each leg may all be configured with gaps of the same size or may be configured to include gaps of different sizes.

The first winding 13 and the second winding 14 may be configured of any winding including a single wire, a Litz wire, an edgewise wire and a PCB winding. For example, by configuring the first winding 13 and the second winding 14 with edgewise windings or PCB windings, losses at high frequencies can be reduced. The standards of the first winding 13 and the second winding 14 are set according to, for example, the design, application, and the like of the joining inductor 10.

As illustrated in Fig. 5, the first winding 13 and the second winding 14 may be wound around the first leg 23 in a state of being twisted with each other. With this configuration, the degree of magnetic coupling can be increased.

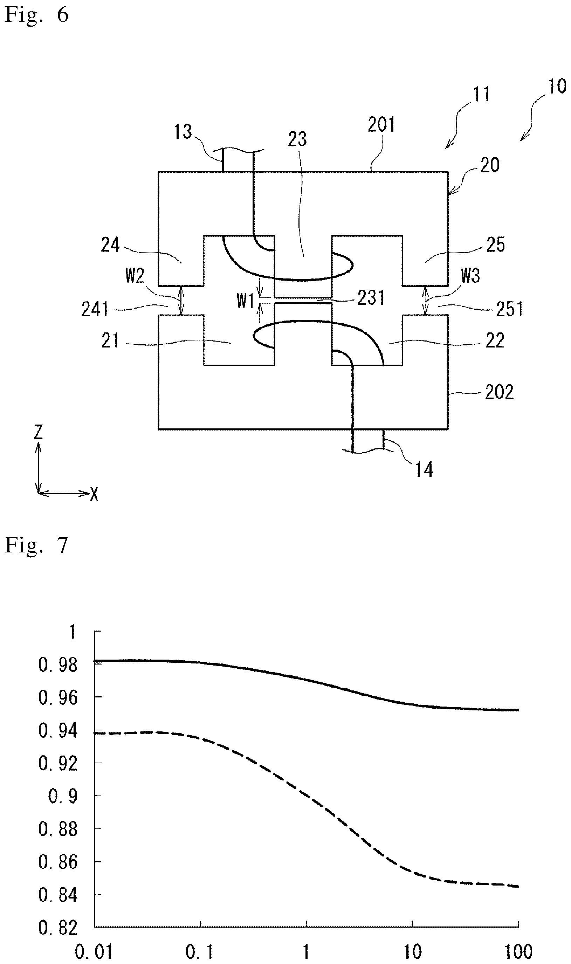

As illustrated in Fig. 6, the core 11 may be configured such that width W1 of the gap 231 of the first leg 23 is larger than widths W2, W3 of the gaps 241, 251 of the second leg 24 and the third leg 25. In the joining inductor 10 of Fig. 6, the width W2 of the gap 241 of the second leg 24 is equal to the width W3 of the gap 251 of the third leg 25.

A relationship between a coupling coefficient and a ratio of the width W2 and the width W3 to the width W1 is illustrated in Fig. 7. In Fig. 7, a horizontal axis represents a ratio of the width W2 to the width W1 and a ratio of the width W3 to the width W1, and a vertical axis represents the coupling coefficient. The relationship between the coupling coefficient and the ratio of the width W2 and the width W3 to the width W1 in the case of using the joining inductor 10 in which the first winding 13 and the second winding 14 are wound 6.5 turns around the first leg 23 (hereinafter referred to as a first joining inductor 10) is indicated by a solid line. The relationship between the coupling coefficient and the ratio of the width W2 and the width W3 to the width W1 in a case of using the joining inductor 10 in which the first winding 13 and the second winding 14 are wound 3.5 turns around the first leg 23 (hereinafter referred to as a second joining inductor 10) is indicated by a dotted line.

It was found that, as illustrated in Fig. 7, when the ratio of the width W2 and the width W3 to the width W1 is smaller than 1, the coupling coefficient is 0.9 or more in any joining inductor 10. It was found that when the ratio of the width W2 and the width W3 to the width W1 is greater than 1, the coupling coefficient is smaller than when the ratio of the width W2 and the width W3 to the width W1 is smaller than 1. It was found that the second joining inductor 10 is more susceptible to variations in the ratio of the width W2 and the width W3 to the width W1 than the first joining inductor 10.

That is, by configuring the core 11 such that the width W1 of the gap 231 of the first leg 23 is larger than the widths W2 and W3 of the gaps 241 and 251 of the second leg 24 and the third leg 25, a degree of magnetic coupling can be increased. The coupling coefficient can be adjusted by adjusting the ratio of the width W2 and the width W3 to the width W1.

The joining inductor 10 is not limited to a two-phase inductor, and may be used as an inductor of three or more phases. For example, when the joining inductor 10 is used as a three-phase inductor, in addition to the first winding 13 and the second winding 14, the third winding is wound around the first leg 23 by N.5 turns. Winding ends of the third winding may be located in the first core window 21 or the second core window 22.

The two members 201 and 202 constituting the core body 20 are not limited to the case where both of them are substantially E-shaped when viewed along the second direction Y. For example, one of the two members 201 and 202 may have a substantially I shape when viewed along the second direction Y.

The bobbin 12 may be omitted. In this case, for example, by covering each winding with an insulating film, the core 11 and each winding can be insulated from each other. The gaps 231, 241, and 251 of each leg can be formed of, for example, a spacer.

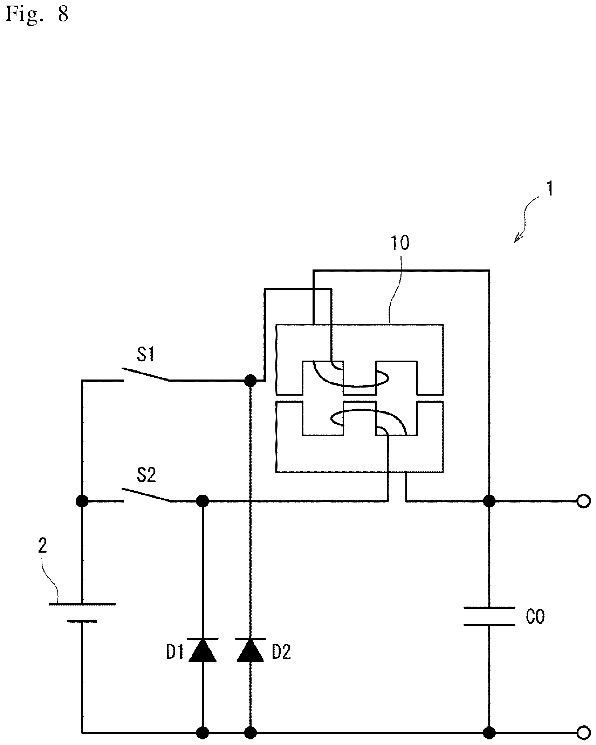

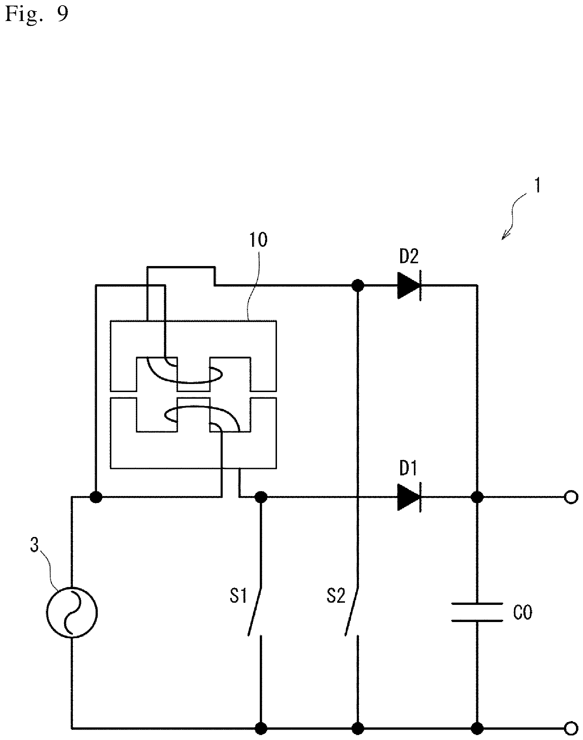

The circuit 1 is not limited to a non-isolated boost converter. The circuit 1 may be, for example, a non-isolated step-down converter to which the DC power supply 2 is connected as illustrated in Fig. 8, or may be a power factor correction (PFC) converter to which the AC power supply 3 is connected as illustrated in Fig. 9.

Various embodiments of the present disclosure have been described above in detail with reference to the drawings. Finally, various aspects of the present disclosure will be described. In the following description, as an example, reference numerals are also added.

The joining inductor 10 according to a first aspect of the present disclosure includes:
a core 11 including a core body 20, the core body 20 including a first core window 21, a second core window 22, a first leg 23, a second leg 24, and a third leg 25, the first core window 21 and the second core window 22 being positioned at an interval in a first direction and each penetrating the core body 20 in a second direction intersecting the first direction, the first leg 23 being positioned between the first core window 21 and the second core window 22, the second leg 24 being positioned on one side of the first leg 23 in the first direction, the first core window 21 being positioned between the first leg 23 and the second leg 24, the third leg 25 being positioned on another side of the first leg 23 in the first direction, the second core window 22 being positioned between the first leg 23 and the third leg 25;
a first winding 13 wound around the first leg 23 and including winding ends 131, 132 positioned at the first core window 21; and
a second winding 14 wound around the first leg 23 and including winding ends 141, 142 positioned at the second core window 22, wherein
each of the first leg 23, the second leg 24, and the third leg 25 includes at least one gap 231, 241, 251 in a third direction intersecting the first direction and the second direction.

In the joining inductor 10 according to a second aspect of the present disclosure,
each of the first leg 23, the second leg 24, and the third leg 25 has a plurality of gaps 231, 241, and 251 in the third direction.

In the joining inductor 10 according to a third aspect of the present disclosure,
the first winding 13 and the second winding 14 are edgewise windings or PCB windings.

In the joining inductor 10 according to a fourth aspect of the present disclosure,
the first winding 13 and the second winding 14 are wound around the first leg 23 in a state of being twisted with each other.

In the joining inductor 10 according to a fifth aspect of the present disclosure, the gap 231 of the first leg 23 is larger than the gaps 241 and 251 of the second leg 24 and the third leg 25.

The circuit 1 according to a sixth aspect of the present disclosure includes
the joining inductor 10 according to the above aspect.

By appropriately combining arbitrary embodiments or modifications among the various embodiments or modifications, it is possible to achieve the respective effects. In addition, combinations of embodiments, combinations of examples, or combinations of embodiments and examples are possible, and combinations of features in different embodiments or examples are also possible.

Although the present disclosure has been fully described in connection with preferred embodiment with reference to the accompanying drawings, various changes and modifications are obvious to those skilled in the art. Such changes and modifications are to be understood as being encompassed in the scope of the present disclosure as set forth in the appended claims.

### INDUSTRIAL APPLICABILITY

The joining inductor of the present disclosure can be applied to, for example, a non-isolated boost converter.

The circuit of the present disclosure can be applied to, for example, a general-purpose power supply and an electric vehicle.

### EXPLANATION OF REFERENCES

1 Circuit
2 DC power supply
3 AC power supply
10 Joining inductor
11 Core
12 Bobbin
13 First winding
131, 132 Winding end
14 Second winding
141, 142 Winding end
20 Core body
201,202 Member
21 First core window
22 Second core window
23 First leg
231 Gap
232 Member
24 Second leg
241 Gap
242 Member
25 Third leg
251 Gap
252 Member

## Claims

1. A joining inductor, comprising:
a core including a core body, the core body including a first core window, a second core window, a first leg, a second leg, and a third leg, the first core window and the second core window being positioned at an interval in a first direction and each penetrating the core body in a second direction intersecting the first direction, the first leg being positioned between the first core window and the second core window, the second leg being positioned on one side of the first leg in the first direction, the first core window being positioned between the first leg and the second leg, the third leg being positioned on another side of the first leg in the first direction, the second core window being positioned between the first leg and the third leg;
a first winding wound around the first leg and including winding ends positioned at the first core window; and
a second winding wound around the first leg and including winding ends positioned at the second core window, wherein
each of the first leg, the second leg, and the third leg includes at least one gap in a third direction intersecting the first direction and the second direction.

2. The joining inductor according to claim 1, wherein
each of the first leg, the second leg, and the third leg has a plurality of gaps in the third direction.

3. The joining inductor according to claim 1 or 2, wherein
the first winding and the second winding are edgewise windings or PCB windings.

4. The joining inductor according to any one of claims 1 to 3, wherein
the first winding and the second winding are wound around the first leg in a state of being twisted with each other.

5. The joining inductor according to any one of claims 1 to 4, wherein,
the gap of the first leg is larger than the gaps of the second leg and the third leg.

6. A circuit, comprising:
the joining inductor according to any one of claims 1 to 5.
